# EUROPÄISCHE PATENTSCHRIFT

(11) **EP 3 199 501 B1**
(45) Veröffentlichungstag und Bekanntmachung des Hinweises auf die Patenterteilung: **07.06.2023**
(21) Anmeldenummer: 16153454.0
(22) Anmeldetag: 29.01.2016
(51) Int. Cl.: C04B 111/62, C04B 111/60, C04B 111/00, C04B 103/00, C04B 28/02, C04B 14/26, C04B 28/04, C04B 14/28, C04B 111/72

(54) **STAUBREDUZIERTE PULVERFÖRMIGE MISCHUNGEN**
DUST-REDUCED POWDERY MIXTURES
MELANGES EN POUDRE A FAIBLE EMISSION DE POUSSIERE

(43) Veröffentlichungstag der Anmeldung: 02.08.2017
(73) Patentinhaber: DAW SE, 64372 Ober-Ramstadt (DE)
(72) Erfinder: Hennicke, Thomas, 99834 Gerstungen (DE); Möbus, Helmut, 64372 Ober-Ramstadt (DE); Lingelbach, Heike, 63110 Rodgau (DE); Schmoll, Daniela, 36199 Rotenburg / Fulda (DE); Putivsev, Mikhail, 36199 Rothenburg / Fulda (DE)
(74) Vertreter: Metten, Karl-Heinz

(56) Entgegenhaltungen:
- EP-A1- 1 790 616
- WO-A1-2008/148055
- CN-A- 104 622 703
- DE-A1- 10 351 259
- DE-A1-102011 084 301
- US-A1- 2007 266 906
- US-A1- 2010 025 625
- US-A1- 2014 150 136
- V Ramachandran et al.: "Influence of sea water solution on mortar containing calcium carbonate", , vol. 23 31 December 1990 (1990-12-31), pages 412-417, Retrieved from the Internet: URL:https://link.springer.com/article/10.1 007%2FBF02472023 [retrieved on 2019-01-17]

## Beschreibung

Die vorliegende Erfindung betrifft staubreduzierte pulverförmige Mischungen. Ferner betrifft die Erfindung ein Verfahren zur Herstellung einer staubreduzierten pulverförmigen Mischung. Des Weiteren betrifft die Erfindung die Verwendung von partikulärem Material zur Verringerung der Staubbildung von pulverförmigen Massen.

Viele trockene pulverförmige Zwischen- und Endprodukte neigen zu extremer Staubbildung. Dies birgt nicht nur die allseits bekannte Gefahr der Staubexplosion. Vielmehr kann über die Atemwege eingeatmeter Staub zu Lungenödemen oder anderen Erkrankungen des Atemsystems führen.

Gipsputze, Gipsspachtelmassen wie Gips-Reparaturspachtelmassen, gipsbasierte Estrichsysteme und gipsbasierte Fliesenkleber wie auch Kalk- und zementöse Massen werden regelmäßig als Pulver in Säcken oder Silos gelagert und angeliefert. Erst auf der Baustelle werden sie mit Anmachwasser angerührt. Beim Umfüllen und Anmachen kommt es regelmäßig zu einer ausgeprägten Staubbildung. Um diese Staubbildung in den Griff zu bekommen, hat man in der US 2,803,561 die Hydrophobierung von Gips mit festen Alkalisilikonaten und in der DE OS 101 07 614 die Hydrophobierung von zementären Fliesenklebern vorgeschlagen mit der Absicht, trockene rieselfähige Pulver zu erhalten, sogenannte Dry-Mix-Systeme.

Aus der DE 10 2005 005 998 ist der Einsatz von Weißölen, Paraffinen und aliphatischen Mineralölen zur Reduktion der Staubbildung von pulverförmigen bauchemischen Produkten bekannt. In diesem Zusammenhang werden auch Substanzen vorgeschlagen, die bei der Verarbeitungstemperatur der pulverförmigen Produkte in Form einer niedrigviskosen Schmelze vorliegen. Gemäß der DE 20 2006 016 797 lassen sich staubarme Trockenmörtel durch Zusatz höherwertiger Alkohole oder kurzkettige Alkylenoxide erhalten.

Gemäß der DE 10 2011 003 268 A1 sollen sich Polysiloxane, Fettsäuren, Fettsäurederivate, natürliche Öle und Kohlenwasserstoffe, wenn auf anorganischen Trägermaterialien in Form von Carbonaten, Silicaten oder sonstigen anorganischen Oxiden oder Mineralien mit einer Porosität größer oder gleich 65% aufgebracht, als Staubreduktionsmittel für Trockenmischungen in Baustoffformulierungen eignen.

In der DE 10 2011 084 301 A1 wird das Problem der Verätzung der Atemwege durch Staubinhalation von stark alkalischen zementären Fliesenklebern unter Ausbildung eines Lungenödems angesprochen. Zur Lösung wird die Hydrophobierung der staubenden Trockenmischung mit einer bei 20°C festen Organosiliciumverbindungen vorgeschlagen, wobei diese Organosiliziumverbindung gebildet zu sein hat aus einem Moläquivalent an Silan, ausgewählt aus Kohlenwasserstofftrihalogensilan, Kohlenwasserstofftrikohlenwasserstoffoxysilan oder Gemischen davon oder deren Teilhydrolysaten, mit Polyhydroxyverbindungen in einem solchen Molverhältnis, dass pro Moläquivalent Halogen- oder Kohlenwasserstoffoxyrest 0,3 bis 1,3 Moläquivalente Hydroxyreste vorliegen.

Die US 2010/025625 A1 stellt auf eine Pech-Emulsion ab, die zu einem Film mit reduzierter Klebrigkeit abtrocknen soll, umfassend kleine Teilchen eines Pechs, die in Wasser in Gegenwart eines Emulgators dispergiert und mit einem fein verteilten Füllstoff verbunden sind. Eine solche Emulsion soll zur Verringerung der Entwicklung von diffusem Staub, insbesondere des Kohlenstaubverlustes von oben offenen Eisenbahnwagen (Bunkerwagen), die Kohle transportieren, beitragen.

Die vorangehend genannten Substanzen lösen das Problem der Staubbildung noch nicht wirklich zufriedenstellend. Auch gehen mit deren Einsatz vielfältige Nachteile einher. Beispielsweise können die Verarbeitungseigenschaften von Baumischungen oder gar die Endeigenschaften der ausgehärteten Beschichtungssysteme negativ beeinflusst werden. So wirken viele Staubreduktionsmittel häufig auch als Abbindeverzögerer. Bei vielen Baustoffmischungen führen die mineralischen und natürlichen Öle zu einem Entschäumungseffekt der angeteigten, d.h. mit Wasser versetzten Baustoffmischungen, beispielsweise Trockenmörtelmischungen. Hierdurch sinkt in der Regel die Ergiebigkeit signifikant. Es wird ein starker Rückgang des Anteils an Frischmörtelluftporen beobachtet, was wiederum eine erhöhte Festmörtelrohdichte sowie eine unerwünschte hohe Steifigkeit und Festigkeit der erhärteten Mörtel mit sich bringt. Auch geht mitunter die leichtgängige Verarbeitung verloren. Außerdem sind planebene Flächen ohne Oberflächenfehler, d.h. ohne Lunker, nur mit einem erheblichen Mehraufwand erhältlich. Staubreduzierende Substanzen mit einem Siedepunkt im Bereich von zum Beispiel 80°C bis etwa 375°C gasen zudem aus ausgehärteten
Putz- oder Mörtelzusammensetzungen aus. Bei Verwendung in Innenräumen führt dieses zu einer geruchlichen wie auch mitunter sogar gesundheitlichen Belastung für die Nutzer. Auch tragen selbst die als geruchsneutral deklarierten mineralischen Weißöle nicht unerheblich zu gesteigerten VOC- und SVOC-Werten bei. Schließlich wird durch Verwendung von Kohlenwasserstoffen oder dergleichen als Staubreduktionsmittel die Brandlast sowohl der hiermit versetzten Trockenmischungen wie auch der ausgehärteten Beschichtungssysteme erhöht.

Nicht selten führt die Handhabung von Trockenbaustoffmischungen, beispielsweise bei deren Herstellung oder auch bei Abfüll- bzw. Umfüllvorgängen, zu Staubemissionen, die gesundheitsschädlich sind, so dass umfangreiche und aufwändige arbeitshygienische Maßnahmen zum Schutz der Bauarbeiter ergriffen werden müssen. Dass einer verringerten Staubbildung bei Trockenbaustoffmischungen unter dem Aspekt der Erhaltung der Gesundheit am Arbeitsplatz große Bedeutung beigemessen wird, dokumentiert die Technische Regel für Gefahrstoffe 900 betreffend Arbeitsplatzgrenzwerte (TRGS 900) (Ausgabe: Januar 2006, BArBl. Heft 1/2006 S. 41-55, zuletzt geändert und ergänzt: GMBl 2015 S. 1186-1189 [Nr. 60] vom 06.11.2015), wonach als allgemeine Staubgrenzwerte 1,25 mg/m³ für die alveolengängige Staubfraktion und 10 mg/m³ für die einatembare Staubfraktion vorgegeben werden. Für Portlandzement liegt nach der TRGS 900 der allgemeine Staubgrenzwert bei 5 mg/m³ für die einatembare Staubfraktion.

Es wäre wünschenswert, zur Staubreduktion von pulverförmigen Massen nicht mehr auf Verbindungen zurückgreifen zu müssen, die mit den Nachteilen des Stands der Technik behaftet sind. Daher lag der vorliegenden Erfindung die Aufgabe zu Grunde, eine Staubreduktion verfügbar zu machen, die einfach und kostengünstig zu erhalten ist, die das Verarbeitungsverhalten der pulverförmigen Massen nicht negativ beeinflusst und die darüber hinaus die Produkteigenschaften der aus den pulverförmige Massen hergestellten Produkte ebenfalls nicht oder nicht nachhaltig negativ beeinflusst. Ferner lag der vorliegenden Erfindung die Aufgabe zugrunde, eine Staubreduktion verfügbar zu machen, die bei pulverförmigen Massen mit insbesondere ausgeprägter Neigung zur Staubbildung zu einer signifikanten Staubreduktion führt.

Demgemäß wurde eine staubreduzierte pulverförmige Mischung gefunden, enthaltend eine Hauptmenge an pulverförmiger Masse ausgewählt aus der Gruppe bestehend aus einem organischen und/oder anorganischen Düngemittel, Insektiziden, Pestiziden, Herbiziden, Pigmentpulver, Polysacchariden, Tierstreu, Nahrungsmitteln, Tiernahrungsmitteln, Einsatzstoffen für die Chemieproduktion, Trockenlöschpulver, organischen Bindemitteln, anorganischen Zusatzstoffen und beliebigen Mischungen der vorangehend genannten Komponenten, und 0,1 bis 45 Gewichtsprozent an partikulärem Material umfassend oder bestehend aus mindestens einer synthetisch gefällten anorganischen Verbindung, wobei die synthetisch gefällte anorganische Verbindung ein synthetisch gefälltes Mineral umfasst oder hieraus besteht und wobei die synthetisch gefällte anorganische Verbindung eine mittlere Teilchengröße D₅₀ im Bereich von 0,1 bis 50 µm aufweist. Die synthetisch gefällte anorganische Verbindung kann ein Ein- oder Mischkristall oder ein Agglomerat aus zwei oder mehr Ein- und/oder Mischkristallen sein. Demgemäß kann die
synthetisch gefällte anorganische Verbindung in Form einer Ansammlung an Ein- oder Mischkristallen, einer Mischung an Ein- und/oder Mischkristallen, einer Ansammlung an Agglomeraten aus zwei oder mehr Ein- und/oder Mischkristallen oder einer Mischung aus Ein- und/oder Mischkristallen und Agglomeraten vorliegen. Ein Agglomerat kann dabei gebildet sein aus mehreren Ein-und/oder Mischkristallen derselben synthetisch gefällten anorganischen Verbindung oder aus Ein- und/oder Mischkristallen aus unterschiedlichen synthetisch gefällten anorganischen Verbindungen. Die pulverförmige Masse im Sinne der Erfindung ist eine solche, die im trockenen Zustand zum Beispiel beim Umfüllvorgang zur Staubbildung neigt. Staubbildung ist leicht erkennbar und kann mithilfe optischer Messgeräte auch quantitativ erfasst werden, beispielsweise über das Lambert-Beer'sche Gesetz. Die partikuläre synthetisch gefällte anorganische Verbindung liegt im Sinne der Erfindung in den staubreduzierten pulverförmigen Mischungen dann als Mindermenge vor, wenn deren Anteil kleiner als 50 Gewichtsprozent, bezogen auf das Gesamtgewicht der staubreduzierten pulverförmigen Mischung, ist.

Bei dem partikulären Material aus der synthetisch gefällten anorganischen Verbindung handelt es sich um ein synthetisch gefälltes Mineral.

Eine besonders wirksame Staubreduktion erhält man überraschenderweise mit solchen partikulären synthetisch gefällten anorganischen Verbindungen, vorzugsweise partikulären synthetisch gefällten Carbonaten, insbesondere synthetisch gefälltem Calciumcarbonat, die in skalenoedrischer, rhomboedrischer, prismatischer, stäbchenförmiger, sphärischer, kubischer, nadelförmiger oder plättchenförmiger Kristallmorphologie vorliegen, wobei die skalenoedrische oder stäbchenförmige Kristallmorphologie bevorzugt ist, oder in Form von Agglomeraten aus einer oder mehreren der vorangehend genannten Kristallmorphologien oder in Form einer Mischung aus mindestens zwei der vorangehend genannten Kristallmorphologien oder in Form einer Mischung aus mindestens einem vorangehend genannten Agglomerat und mindestens einer der vorangehend genannten Kristallmorphologien, wobei Mischungen von synthetisch gefällten anorganischen Verbindungen mit skalenoedrischer und stäbchenförmigen Kristallmorphologie besonders bevorzugt sind. In einer geeigneten Ausführungsform kann auf Mischungen aus synthetisch gefällten anorganischen Verbindungen mit skalenoedrischer Morphologie zurückgegriffen werden. Geeignete Mischungen umfassen z.B. auch synthetisch gefällte anorganische Verbindungen mit stäbchenförmiger Morphologie und synthetisch gefällte anorganische Verbindungen mit nadelförmiger Morphologie, beispielsweise nadelförmiges Aragonit und stäbchenförmiges Aragonit. Bei einer plättchenförmigen Kristallmorphologie kann die Dicke der Plättchen variieren, so dass auch tafelförmige Morphologien hiervon mit umfasst werden. Synthetisch gefällte anorganische Verbindungen mit stäbchenförmiger Morphologie umfassen im Sinne der Erfindung auch solche mit zylinderförmiger Morphologie.

Als besonders wirksam als Staubreduktionsmittel hat sich partikuläres synthetisch gefälltes Carbonat erwiesen. Geeignete synthetisch gefällte Carbonate können dabei ausgewählt sein aus der Gruppe bestehend aus Lithium-, Natrium-, Kalium-, Mangan-, Zink-, Eisen-, Kupfer-, Magnesium-, Calcium-, Strontium-, Barium-, Zirkoniumcarbonat und Mischungen dieser Carbonate. Zirkoniumcarbonat stellt hierbei Zr(IV)-carbonat mit der Summenformel (ZrO)₂(OH)₂CO₃ dar. Bei Kupfercarbonat handelt es sich um die Verbindungen 2 CuCO₃ · Cu(OH)₂ und (CuCO₃ · Cu(OH)₂) sowie um Mischungen dieser Verbindungen. Bevorzugt sind Carbonate zweiwertiger Metalle, insbesondere Mangan-, Zink-, Eisen-, Kupfer-, Magnesium-, Calcium-, Strontium-, Bariumcarbonat oder deren beliebige Mischungen. Geeignete synthetisch gefällte Carbonate umfassen des weiteren Calciummagnesiumcarbonate (CaMg[CO₃]₂). Ferner kommen auch synthetisch gefälltes Bariumsulfat und synthetisch gefälltes Calciumfluorid (Flussspat) in Betracht. Unter den synthetisch gefällten Carbonaten hat sich synthetisch gefälltes Calciumcarbonat als Staubreduktionsmittel für pulverförmige Massen als besonders vorteilhaft erwiesen. Ferner wurde überraschend gefunden, dass eine Staubreduzierung besonders effektiv mit synthetisch gefälltem Calciumcarbonat in Form von Calcit, insbesondere skalenoedrischem Calcit, sowie in Form von Aragonit, insbesondere stäbchenförmigem und/oder nadelförmigem Aragonit, gelingt. Selbstverständlich können auch Mischungen an synthetisch gefälltem Calcit und synthetisch gefälltem Aragonit, zum Beispiel synthetisch gefälltem skalenoedrischen Calcit und synthetisch gefälltem Aragonit, insbesondere in Stäbchen- und/oder Nadelform, eingesetzt werden.

Das partikuläre Material in Form synthetisch gefällter anorganischer Verbindungen stellt in einer bevorzugten Ausföhrungsform unbeschichtetes partikuläres Material dar.

In den erfindungsgemäßen staubreduzierten pulverförmigen Mischungen liegt der Anteil der Mindermenge an partikulärem Material, insbesondere der Anteil der Mindermenge in Form von synthetisch gefälltem Carbonat, insbesondere Calciumcarbonat, in einer bevorzugten Ausgestaltung im Bereich von 1,0 bis 30 Gewichtsprozent und besonders bevorzugt im Bereich von 2,0 bis 20 Gewichtsprozent, jeweils bezogen auf das Gesamtgewicht der staubreduzierten pulverförmigen Mischung. Die Hauptmenge an pulverförmiger Masse bildet bei den vorangehend genannten Ausführungsformen in der Regel im Wesentlichen den Anteil, der die staubreduzierte Mischung zu 100 Gew.-% ergänzt.

Erfindungsgemäß wird für die partikuläre synthetisch gefällte anorganische Verbindung auf eine mittlere Teilchengröße D₅₀ im Bereich von 0,1 µm bis 50 µm, bevorzugt im Bereich von 0,2 µm bis 25 µm und besonders bevorzugt im Bereich von 0,3 µm bis 20 µm sowie insbesondere im Bereich von 0,4 µm bis 12 µm und nochmals bevorzugt im Bereich von 0,4 µm bis 10 µm zurückgegriffen.

Besonders gute Resultate stellen sich bei Verwendung von partikulären synthetisch gefällten anorganischen Verbindungen ein, die über eine enge Teilchengrößenverteilung verfügen. Demgemäß sind solche partikulären synthetisch gefällten anorganischen Verbindungen bevorzugt, deren Teilchengröße D₁₀ im Bereich von 0,1 µm bis 7 µm, bevorzugt im Bereich von 0,2 µm bis 5 µm und besonders bevorzugt im Bereich von 0,5 µm bis 3 µm, liegt und/oder deren Teilchengröße D₉₀ im Bereich im Bereich von 1 µm bis 200 µm, bevorzugt im Bereich von 3 µm bis 100 µm und besonders bevorzugt im Bereich von 4 µm bis 20 µm, liegt.

Neben den partikulären synthetisch gefällten anorganischen Verbindungen, insbesondere in Form von synthetisch gefälltem Calciumcarbonat, kann in den staubreduzierten pulverförmigen Mischungen
auch mindestens ein gebrochenes und/oder gemahlenes natürliches Mineral, vorzugsweise Carbonat und besonders bevorzugt Calciumcarbonat, anwesend sein. Insoweit die pulverförmige Masse stets die Hauptmenge bildet, kann dieses natürliche Mineral in der erfindungsgemäßen staubreduzierten Mischung nur in einer Mindermenge vorliegen.

Die Hauptmenge der erfindungsgemäßen staubreduzierten pulverförmige Mischungen in Form einer pulverförmigen Masse kann aus einer Vielzahl an Materialien ausgewählt werden. Diese pulverförmige Masse liegt in den erfindungsgemäßen Mischungen regelmäßig als Trockenmasse vor. Die pulverförmigen Massen neigen, ohne dass Vorkehrungen zur Staubminderung oder -unterdrückung unternommen werden, zur Staubbildung, beispielsweise beim Umfüllen oder bei der Verarbeitung. Pulverförmige Massen, deren Staubbildung durch das Staubreduktionsmittel gemäß der Erfindung signifikant verringert werden können, sind organische Düngemittel, anorganische Düngemittel, Insektizide, Pestizide, Herbizide, Pigmentpulver, z.B. Pigmentmischung, Polysaccharide, insbesondere Pektin, Chitin, Cellulose, Stärke, insbesondere Stärkemehl und/oder Amylopektin, Celluloseester, insbesondere Celluloseacetat, -acetobutyrat und/oder -propionat, Cellulosenitrat, Celluloseether, insbesondere Carboxymethyl-, Methyl-, Carboxyethyl-, Hydroxyethyl-, Ethyl-, Hydroxyethylmethyl- und/oder Hydroxypropylmethylcellulose, und Stärkeether, insbesondere Hydroxypropylstärke, Tierstreu, insbesondere Katzenstreu, Nahrungsmittel, Tiernahrungsmittel, Einsatzstoffe für die Chemieproduktion, Trockenlöschpulver und Trockenbaustoffkomponenten genannt. Selbstverständlich können auch beliebige Mischungen der vorangehend genannten Komponenten mit der Erfindung eingesetzt werden. Setzt man synthetisch gefälltes Calciumcarbonat als Staubreduzierungsmittel im Tierfutter ein, kann dieses, beispielsweise bei Legehennen, zu einer erwünschten Erhöhung der Calciumcarbonatzufuhr beitragen. Als besonders umweltschonend hat sich auch der Einsatz von synthetisch gefällten anorganischen Verbindungen gemäß der Erfindung als Staubreduktionsmittel in Düngemitteln, Insektiziden, Herbiziden oder Pestiziden erwiesen. Indem Verluste durch Verwehung drastisch verringert werden können, macht sich der Mehrverbrauch durch den Zusatz an Staubreduktionsmittel nicht nachteilig bemerkbar, zumal die genannten Substanzen wesentlich gezielter ausgetragen werden können.

Wie sich gezeigt hat, lassen sich Trockenbaustoffkomponenten bei Verwendung als Hauptmenge in den staubreduzierten pulverförmigen Mischungen gemäß der Erfindung besonders gut umfüllen, handhaben und verarbeiten. Für die erfindungsgemäßen staubreduzierten pulverförmigen Mischungen greift man demgemäß bevorzugt zurück auf organische Bindemittel, insbesondere Dispersionspulver wie redispergierbare Dispersionspulver, anorganische Zusatzstoffe, insbesondere Puzzolane und/oder latent-hydraulische Zusatzstoffe, z.B. Hüttensand, gemahlener Hüttensand, Trass, Flugasche und/oder Microsilikate, Schichtsilikate, Füllstoffe, insbesondere mineralische Füllstoffe, Metallseifen, Alumini umoxide, pyrogene Kieselsäure und/oder Fällungskieselsäure. Selbstverständlich können
auch beliebige Mischungen der vorangehend genannten Komponenten als pulverförmige Masse eingesetzt werden. Je nach Verwendungszweck können bestimmte Dispersionspulver auch als organische Bindemittel eingesetzt werden. Dies ist dem Fachmann bekannt. Ferner ist dem Fachmann bekannt, dass sich unter anorganischen bzw. mineralischen Bindemitteln Zemente nach DIN EN 197-1:2011-11, beispielsweise Portlandzement, Trasszement und/oder Hüttenzement, weiterhin Aluminatzement, Calcium-Sulfo-Aluminatzement, Magnesiazement, Phosphatzement, Kalkhydrat, hydraulisch abbindender Kalk, Trass, Flugasche, gemahlene Hüttensande, Mikrosilica, Calciumsulfat als Anhydrid oder Halbhydrat sowie deren Mischungen subsumieren lassen.

Geeignete Füllstoffe als Baustoffkomponente für Baustofftrockenformulierungen umfassen zum Beispiel Sande und/oder Kiese und/oder Mehle in natürlicher Form und/oder in gebrochener und/oder gemahlener Form. Als Sande, Kiese und Mehle in natürlicher Form kommen z.B. natürlich vorkommende, unverfestigte Sedimente in Betracht, welche sich überwiegend aus Mineralkörnern zusammensetzen. Diese Füllstofftypen sind dem Fachmann als Baustoffkomponenten hinreichend bekannt. Als geeignete Beispiele für gebrochene und/oder gemahlene Sande, Kiese und/oder Mehle seien Kalksteinsplitt, Dolomitmehl, Ton, Kreide, Glimmer, Korund, Quarzmehl, Kalksteinmehl und/oder Basaltsplitt genannt. Geeignete Füllstoffe im Sinne der vorliegenden Erfindung umfassen auch sogenannte Leichtfüllstoffe. Im Unterschied zu herkömmlichen Füllstoffen, wie sie als Baustoffkomponente häufig zum Einsatz kommen, bezeichnet man als Leichtfüllstoffen Füllstoffe mit niederem Schüttgewicht, meist kleiner als 500g/l. Typische Leichtfüllstoffe umfassen zum Beispiel Mikrohohlkugeln aus Glas oder Polystyrolkugeln sowie Alumosilikate, Aluminium-Siliciumoxid, Calcium-Silikathydrat und/oder vulkanische Schlacke. Exemplarisch seien als dem Fachmann bekannte Leichtfüllstoffe Perlite, Celite, Cabosil, Circosil, Eurocell, Fillite, Promaxon und Vermex genannt.

Geeignete Trockenbaustoffmischungen, deren Staubneigung, wenn als Hauptmenge in den staubreduzierten pulverförmige Mischungen vorliegend, sich signifikant reduzieren lässt, können zum Beispiel ausgewählt werden aus der Gruppe bestehend aus Trockenmörtel, Trockenspachtelmassen, Putzmörtel, Mauermörtel, Estrich, Ausgleichsmassen, insbesondere Fußbodenausgleichsmassen, Fugenmassen, Armierungsmassen, Fliesenklebern, Bauklebern, beispielsweise zur Befestigung von Dämmstoffelementen, Trockenputzzusammensetzungen, Spritzbeton, Spritzmörtel und einer Mischung der vorangehend genannten pulverförmigen Massen. Ausgleichsmassen im Sinne der vorliegenden Erfindung umfassen auch sogenannte Selbstverlaufsmassen. Trockenputzzusammensetzungen im Sinne der vorliegenden Erfindung umfassen auch sogenannte mineralische Edelputze. Trockenmörtel im Sinne der vorliegenden Erfindung umfassen auch Spritzmörtel.

Diese Trockenbaustoffmischungen können auch herkömmliche Additive enthalten. Derartige geeignete Additive werden regelmäßig zur Verbesserung der Standfestigkeit, Verarbeitbarkeit, Wasserabweisung, Wasserfestigkeit, Wasserrückhaltung im Frischmörtel, Verlängerung oder Verkürzung der Verarbeitbarkeitszeit von z.B. angeteigten Mörtel, Verringerung des Schwindverhaltens, Erhöhung des Quellens zur Schwindkompensation, Beschleunigung des Erhärtungsvorgangs, Eintrag von Luftporen und/oder zur Entschäumung eingesetzt. Übliche Additive für Trockenbaustoffmischungen umfassen Verdickungsmittel, beispielsweise Polysaccharide, Polycarbonsäuren wie Polyacrylsäure und Polyvinylalkohole, welche gegebenenfalls acetalisiert oder hydrophob modifiziert sein können, Vernetzer, Verzögerer wie Hydroxycarbonsäuren, Dicarbonsäuren oder deren Salze, Abbindebeschleuniger, beispielsweise Aluminiumverbindungen, Konservierungsmittel, Filmbildehilfsmittel, Dispergiermittel, Schaumstabilisatoren, Entschäumer, Verflüssiger, Fließmittel und Flammschutzmittel (z. B. Aluminiumhydroxid). In den genannten Trockenbaumischungen liegen die üblichen Additive regelmäßig in einer Gesamtmenge nicht oberhalb von zwei Gewichtsprozent vor, vorzugsweise in einer Gesamtmenge nicht oberhalb von einem Gewichtsprozent.

Stärkeether, insbesondere Hydroxypropylstärke, Tierstreu, insbesondere Katzenstreu, Nahrungsmitteln, Tiernahrungsmitteln, Einsatzstoffen für die Chemieproduktion, Trockenlöschpulver und beliebigen Mischungen der vorangehend genannten Komponenten und einer Mindermenge an Talkum, Sepiolith, Loughlinit, Kaolinit oder einer beliebigen Mischung der vorangehend genannten Materialien.

Talkum, Sepiolith, Loughlinit, Kaolinit oder die beliebige Mischung der vorangehend genannten Materialien liegt in der erfindungsgemäßen staubreduzierten pulverförmigen Mischung gemäß der vierten Ausführungsvariante der Erfindung dann als Mindermenge vor, wenn deren Anteil kleiner als 50 Gewichtsprozent, bezogen auf das Gesamtgewicht der staubreduzierten pulverförmige Mischung, ist. Bevorzugt liegt der Anteil dieser Mindermenge gemäß der vierten Ausführungsvariante der Erfindung im Bereich von 0,1 bis 40 Gewichtsprozent, besonders bevorzugt im Bereich von 0,5 bis 25 Gewichtsprozent und insbesondere im Bereich von 1 bis 15 Gewichtsprozent, jeweils bezogen auf das Gesamtgewicht der staubreduzierten pulverförmige Mischung.

Besonders bevorzugt wird bei der vierten Ausführungsvariante der Erfindung die pulverförmige Hauptkomponente ausgewählt aus der Gruppe, bestehend aus organischem und/oder ein anorganischem Düngemittel, Insektiziden, Pestiziden, Herbiziden, Pektin, Chitin, Cellulose, Stärke, insbesondere Stärkemehl und/oder Amylopektin, Celluloseester, insbesondere Celluloseacetat, -acetobutyrat und/oder -propionat, Cellulosenitrat, und/oder Stärkeether, insbesondere Hydroxypropylstärke, Tierstreu, insbesondere Katzenstreu, Nahrungsmitteln, Tiernahrungsmitteln, Einsatzstoffen für die Chemieproduktion, Trockenlöschpulver und beliebigen Mischungen der vorangehend genannten Komponenten.

Es hat sich überraschend gezeigt, dass partikuläres Material, ausgewählt aus der Gruppe, bestehend aus Talkum, Sepiolith, Loughlinit, Kaolinit und einer Mischung der vorangehend genannten Materialien, wenn als Mindermenge in einer pulverförmigen Mischung vorliegend, zur Verringerung der Staubbildung von pulverförmigen Massen wirkungsvoll eingesetzt werden kann. Hierbei kommen als geeignete pulverförmige Massen, deren Staubbildung wirkungsvoll reduziert werden kann, solche in Betracht, ausgewählt aus der Gruppe bestehend aus organischem Düngemittel, anorganischem Düngemittel, Insektiziden, Pestiziden, Herbiziden, Pigmentpulver, z.B. Pigmentmischung, Polysacchariden, insbesondere Pektin, Chitin, Cellulose, Stärke, insbesondere Stärkemehl und/oder Amylopektin, Cellulo-Mit der Erfindung gelingt es überraschenderweise, die Menge an alveolengängigem Staub gemäß DIN EN 481:1993-09 wie auch die Menge an einatembarem Staub gemäß DIN EN 481:1993-09 signifikant zu verringern, beispielsweise bei der Herstellung, Verarbeitung, Handhabung oder dem Umfüllen von pulverförmige Massen.

Das der Erfindung zugrunde liegende Problem wird des Weiteren gelöst durch ein Verfahren zur Herstellung einer erfindungsgemäßen staubreduzierten pulverförmigen Mischung, bei dem man die pulverförmige Masse und die Menge an partikulärem Material umfassend oder bestehend aus der mindestens einen synthetisch gefällten anorganischen Verbindung miteinander vermengt.

Mit der vorliegenden Erfindung geht die überraschende Erkenntnis einher, dass sich durch Zusatz von bestimmten synthetisch gefällten anorganischen Verbindungen die Staubbildung bei pulverförmigen Massen signifikant zurückdrängen lässt, und zwar mit überraschend geringen Mengen an diesen Verbindungen. Besonders überraschend ist auch, dass sich die Staubreduktion durch Verwendung anorganischer Komponenten drastisch verringern lässt, deren D₅₀-Partikelgröße selber im Bereich der einatembaren oder alveolengängigen Stäube liegt.

Als vorteilhaft hat sich auch herausgestellt, dass die nun gefundenen Staubreduzierungsmittel ihre Wirkung zur Staubreduzierung, nachdem in eine pulverförmige Masse eingebracht, über einen sehr langen Zeitraum beibehalten. Dieses erlaubt es, die erfindungsgemäßen staubreduzierten pulverförmigen Mischungen, insbesondere auch wenn in Form von Baustofftrockenformulierungen vorliegend, über einen längeren Zeitraum zu lagern. Durch Erhöhung der Menge an Staubreduzierungsmitteln in den Baustoffformulierungen kann deren staubreduzierende Wirkung im Allgemeinen gesteigert werden.

Von Vorteil bei Verwendung der pulverförmigen Mischung der Erfindung, d.h. bei Einsatz von partikulären synthetisch gefällten anorganischen Verbindungen, wobei die synthetisch gefällte anorganische Verbindung ein synthetisch gefälltes Mineral umfasst oder hieraus besteht und wobei die synthetisch gefällte anorganische Verbindung eine mittlere Teilchengröße D₅₀ im Bereich von 0,1 bis 50 µm aufweist, als Staubreduktionsmittel ist auch, dass bei Baustoffkomponenten bzw. Baustofftrockenmischungen weder die Applikations- noch die Endeigenschaften der aus diesen Ausgangsprodukten erhaltenen Beschichtungen oder Baukörper, beispielsweise daraus hergestellten Putz-, Armierungs-, Spachtel-, Klebe- oder sonstige Schichten negativ beeinflusst werden.

Die Erfindung wird anhand der folgenden Beispiele näher erläutert, ohne dass die Erfindung auf diese Beispiele beschränkt ist.

Das Staubungsverhalten der einzelnen Proben wurde foto-optisch mit dem Gerät Dustmon L der Firma Microtrac bestimmt, dessen Messprinzip auf dem Lambert-Beer'schen Gesetz beruht. Hierfür wurde eine gleiche Menge einer Pulverprobe aus einer vorgegebenen, unveränderten Höhe in die Messzelle fallen gelassen, dann über die Dauer von 30 Sekunden die Staubkonzentration bestimmt und in einem Diagramm aufgetragen. Hierbei wurde die Staubkonzentration über einen Staubindex erfasst, bei dem der Index 0 für keine Trübung und der Index 100 für eine vollständige Trübung stand, bei der kein Licht den Detektor mehr erreichte. Zur Charakterisierung des Staubungsverhaltens wurde die Fläche unter dem jeweils ermittelten Graphen als Staubflächenindex innerhalb der vorgenannten Messdauer von 30 Sekunden bestimmt. Auf Basis der ermittelten Staubflächenindices wurde eine Unterscheidung im Staubungsverhalten vorgenommen.

Für die Staubmessung wurden unterschiedliche Trockenmörtel hergestellt.

### Probe 1: Armierungsmörtel - erfindungsgemäß

Der erfindungsgemäße Armierungsmörtel bestand aus 22 Gewichtsprozent Zement, 2 Gewichtsprozent Kalkhydrat, 5 Gewichtsprozent an natürlich gewonnenem, gemahlenem Kalksteinmehl, 10 Gewichtsprozent synthetisch gefällten Calcits mit einem D10 von ca. 1 µm, einem D50 von ca. 2 µm und einem D90 von ca.7 µm und skalenoedrischer Morphologie, 2,2 Gewichtsprozent Dispersionspulver auf Basis von Vinylacetat-Ethylen-Copolymeren, 0,65 Gewichtsprozent Additive und 58,15 Gewichtsprozent Sand.

### Probe 2: Armierungsmörtel - Vergleich

Der Armierungsmörtel gemäß Probe 2 unterschied sich von dem Mörtel gemäß Probe 1 dadurch, dass die Menge an synthetisch gefälltem Calcit ersetzt wurde durch 10 Gewichtsprozent an natürlich gewonnenem, gemahlenem Kalksteinmehl.

Während sich für die Probe 1 ein Staubflächenindex von 125 errechnete, ergab die Vermessung der Probe 2 einen Staubflächenindex von 697.

Die aus dem Armierungsmörtel gemäß Probe 1 erhaltene Beschichtung unterschied sich hinsichtlich Zugfestigkeit auf EPS und Beton und auch hinsichtlich Druck- und Biegezugfestigkeit sowie dem Luftporengehalt nicht von Beschichtungen aus dem Armierungsmörtel gemäß Probe 2. Auch konnten keine Unterschiede beim Verarbeitungsverhalten festgestellt werden.

### Proben 3 bis 5: Haftputzgips - erfindungsgemäß

Es wurden dem kommerziell erhältlichen Haftputzgips Knauf Rotband jeweils 5 Gewichtsprozent, 10 Gewichtsprozent und 20 Gewichtsprozent eines synthetisch gefällten Calciumcarbonats mit einem D10 von ca. 1 µm, einem D50 von ca. 2 µm und einem D90 von ca.7 µm und mit skalenoedrische Morphologie zugesetzt.

### Probe 6: Haftputzgips - Vergleich

Als Probe 6 kam der kommerziell erhältliche, unmodifizierte Haftputzgips Knauf Rotband zum Einsatz.

Während sich für die Proben 3, 4 und 5 Staubflächenindices von 46, 36 bzw. 27 ergaben, lieferte die Vermessung der Probe 6 einen Wert von 103.

### Proben 7 bis 11: Armierungsmörtel - erfindungsgemäß

Die erfindungsgemäßen Armierungsmörtel gemäß den Proben 7 bis 11 bestanden aus 22 Gewichtsprozent Zement, 2 Gewichtsprozent Kalkhydrat, 14/12,5/10/5/0 Gewichtsprozent an natürlich gewonnenem, gemahlenem Kalksteinmehl, 1/2,5/5/10/15 Gewichtsprozent synthetisch gefälltem Calciumcarbonat in Form von Calcit mit einem D10 von ca. 1 µm, einem D50 von ca. 3 µm und einem D90 von ca.7 µm und mit skalenoedrischer Morphologie, 2,2 Gewichtsprozent Dispersionspulver auf Basis von Vinylacetat-Ethylen-Copolymeren, 0,65 Gewichtsprozent Additive und 58,15 Gewichtsprozent Sand.

Als Vergleichsprobe zu den Armierungsmörteln gemäß den Proben 7 bis 11 diente die Probe 2, welche bekanntlich einen Staubflächenindex von 697 lieferte. Hingegen wurden mit den Proben 7 bis 11 die folgenden Staubflächenindices erhalten: 564, 300, 175, 78 bzw. 55.

### Probe 12: Armierungsmörtel - erfindungsgemäß

Der Armierungsmörtel gemäß Probe 12 unterschied sich von dem Armierungsmörtel gemäß Probe 10 dadurch, dass anstelle von 10 Gewichtsprozent an Calcit mit skalenoedrischer Morphologie 10 Gewichtsprozent an stäbchenförmigen Aragonit mit einem D10 von ca.1 µm, einem D50 von ca. 2 µm und einem D90 von ca. 5 µm und mit nadelförmiger Morphologie verwendet wurde.

Als Vergleich diente wiederum Probe 2, welche einen Staubflächenindex von 697 lieferte. Für die Probe 12 ergab sich ein Wert von 58.

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Pulverförmige Mischung, enthaltend
eine Hauptmenge an pulverförmiger Masse ausgewählt aus der Gruppe bestehend aus einem organischen und/oder ein anorganischen Düngemittel, Insektiziden, Pestiziden, Herbiziden, Pigmentpulver, Polysacchariden, Tierstreu, Nahrungsmitteln, Tiernahrungsmitteln, Einsatzstoffe für die Chemieproduktion, Trockenlöschpulver, organischen Bindemitteln, anorganischen Zusatzstoffen und beliebigen Mischungen der vorangehend genannten Komponenten, und 0,1 bis 45 Gewichtsprozent an partikulärem Material umfassend oder bestehend aus mindestens einer synthetisch gefällten anorganischen Verbindung, wobei die synthetisch gefällte anorganische Verbindung ein synthetisch gefälltes Mineral umfasst oder hieraus besteht und wobei die synthetisch gefällte anorganische Verbindung eine mittlere Teilchengröße D₅₀ im Bereich von 0,1 bis 50 µm aufweist.

2. Pulverförmige Mischung nach Anspruch 1, **dadurch gekennzeichnet, dass** das synthetisch gefällte Mineral synthetisch gefälltes Carbonat darstellt.

3. Pulverförmige Mischung nach Anspruch 2, **dadurch gekennzeichnet, dass** das synthetisch gefällte Carbonat ausgewählt ist aus der Gruppe bestehend aus Lithium-, Natrium-, Kalium-, Mangan-, Zink-, Eisen-, Kupfer-, Magnesium-, Calcium-, Strontium-, Barium-, Zirkoniumcarbonat und Mischungen dieser Carbonate, bevorzugt aus Mangan-, Zink-, Eisen-, Kupfer-, Magnesium-, Calcium-, Strontium-, Bariumcarbonat und deren beliebigen Mischungen, besonders bevorzugt Calciumcarbonat.

4. Pulverförmige Mischung nach einem oder mehreren der vorangehenden Ansprüche **dadurch gekennzeichnet, dass**
die synthetisch gefällte anorganische Verbindung, vorzugsweise das synthetisch gefällte Carbonat und besonders bevorzugt Calciumcarbonat, in skalenoedrischer, rhomboedrischer, prismatischer, stäbchenförmiger, sphärischer, kubischer, nadelförmiger oder plättchenförmiger Kristallmorphologie vorliegt, wobei die skalenoedrische oder stäbchenförmige Kristallmorphologie bevorzugt ist, oder in Form von Agglomeraten aus einer oder mehreren der vorangehend genannten Kristallmorphologien oder in Form einer Mischung aus mindestens zwei der vorangehend genannten Kristallmorphologien oder in Form einer Mischung aus mindestens einem vorangehend genannten Agglomerat und mindestens einer der vorangehend genannten Kristallmorphologien, wobei Mischungen von synthetisch gefällten anorganischen Verbindungen mit skalenoedrischer und stäbchenförmigen Kristallmorphologie besonders bevorzugt sind.

5. Pulverförmige Mischung nach einem oder mehreren der Ansprüche 2 bis 4, **dadurch gekennzeichnet, dass**
das synthetisch gefällte Calciumcarbonat Calcit, insbesondere skalenoedrischen Calcit, und/oder Aragonit, insbesondere stäbchenförmigen und/oder nadelförmigen Aragonit, umfasst oder hieraus besteht.

6. Pulverförmige Mischung nach einem oder mehreren der vorangehenden Ansprüche, **dadurch gekennzeichnet, dass**
das partikuläre Material unbeschichtetes partikuläres Material darstellt.

7. Pulverförmige Mischung nach einem oder mehreren der vorangehenden Ansprüche, **dadurch gekennzeichnet, dass**
das Pigmentpulver eine Pigmentmischung darstellt oder dass das Polysaccharid Pektin, Chitin, Cellulose, Stärke, insbesondere Stärkemehl und/oder Amylopektin, Celluloseester, insbesondere Celluloseacetat, -acetobutyrat und/oder -propionat, Cellulosenitrat, Celluloseether, insbesondere Carboxymethyl-, Methyl-, Carboxyethyl-, Hydroxyethyl-, Ethyl-, Hydroxyethylmethyl- und/oder Hydroxypropylmethylcellulose, und/oder Stärkeether, insbesondere Hydroxypropylstärke, darstellt.

8. Pulverförmige Mischung nach einem der vorangehenden Ansprüche, **dadurch gekennzeichnet, dass**
das organische Bindemittel Dispersionspulver wie redispergierbare Dispersionspulver darstellt oder dass die anorganischen Zusatzstoffe Puzzolane und/oder latent-hydraulische Zusatzstoffe, insbesondere Hüttensand, gemahlenen Hüttensand, Trass, Flugasche und/oder Microsilikate, Schichtsilikate, Füllstoffe, insbesondere mineralische Füllstoffe, Metallseifen, pyrogene Kieselsäure und/oder Fällungskieselsäure oder deren beliebige Mischungen darstellen.

9. Pulverförmige Mischung nach einem oder mehreren der vorangehenden Ansprüche, ferner enthaltend
mindestens ein gebrochenes und/oder gemahlenes natürliches Mineral.

10. Pulverförmige Mischung nach einem oder mehreren der vorangehenden Ansprüche, **dadurch gekennzeichnet, dass**
das partikuläre Material, insbesondere synthetisch gefälltes Calciumcarbonat, in der pulverförmigen Mischung in einer Menge im Bereich von 1,0 bis 30 Gewichtsprozent und bevorzugt im Bereich von 2,0 bis 20 Gewichtsprozent, jeweils bezogen auf das Gesamtgewicht der pulverförmigen Mischung, vorliegt.

11. Pulverförmige Mischung nach einem oder mehreren der vorangehenden Ansprüche, **dadurch gekennzeichnet, dass**
die synthetisch gefällte anorganische Verbindung eine mittlere Teilchengröße D₅₀ im Bereich von 0,2 bis 25 µm und bevorzugt im Bereich von 0,3 bis 20 µm und besonders bevorzugt im Bereich 0,4 bis 10 µm, aufweist.

12. Verfahren zur Herstellung einer pulverförmigen Mischung nach einem oder mehreren der Ansprüche 1 bis 11, **dadurch gekennzeichnet, dass** man die pulverförmige Masse und die Menge an dem partikulären Material umfassend oder bestehend aus der mindestens einen synthetisch gefällten anorganischen Verbindung miteinander vermengt.

13. Verwendung von partikulärem Material umfassend oder bestehend aus mindestens einer synthetisch gefällten anorganischen Verbindung, wobei die synthetisch gefällte anorganische Verbindung eine mittlere Teilchengröße D₅₀ im Bereich von 0,1 bis 50 µm aufweist und wobei die synthetisch gefällte anorganische Verbindung ein synthetisch gefälltes Mineral umfasst oder hieraus besteht, zur Verringerung der Staubbildung von pulverförmigen Massen, wobei das partikuläre Material und die pulverförmige Masse in Form einer pulverförmigen Mischung vorliegen, wobei die pulverförmige Masse die Hauptmenge der pulverförmigen Mischung bildet und wobei die pulverförmige Mischung 0,1 bis 45 Gewichtsprozent an dem partikulären Material enthält.

14. Verwendung nach Anspruch 13, **dadurch gekennzeichnet, dass** die pulverförmige Masse ein organisches und/oder ein anorganisches Düngemittel, Insektizid, Pestizid, Herbizid, Pigmentpulver, z.B. Pigmentmischung, Polysaccharid, insbesondere Pektin, Chitin, Cellulose, Stärke, insbesondere Stärkemehl und/oder Amylopektin, Celluloseester, insbesondere Celluloseacetat, -acetobutyrat und/oder - propionat, Cellulosenitrat, Celluloseether, insbesondere Carboxymethyl-, Methyl-, Carboxyethyl-, Hydroxyethyl-, Ethyl-, Hydroxyethylmethyl- und/oder Hydroxypropylmethylcellulose, und/oder Stärkeether, insbesondere Hydroxypropylstärke, Tierstreu, insbesondere Katzenstreu, Nahrungsmittel, Tiernahrungsmittel, Einsatzstoffe für die Chemieproduktion, Trockenlöschpulver oder Trockenbaustoffkomponenten oder beliebige Mischungen der vorangehend genannten Komponenten umfasst.

15. Verwendung nach Anspruch 13 oder 14, **dadurch gekennzeichnet, dass** die pulverförmige Masse, insbesondere in Form der Trockenbaustoffkomponente, ausgewählt ist aus der Gruppe bestehend aus Dispersionspulver, anorganischen Bindemitteln, z.B. Alkaliwassergläsern, organischen Bindemitteln, Schichtsilikaten, Füllstoffen, insbesondere mineralischen Füllstoffen, gemahlener Hüttensand, Flugasche, Metallseifen, Aluminiumoxiden, Microsilikaten, pyrogener Kieselsäure, Fällungskieselsäuren, Zement, Calciumsulfatdihydrat, Calciumsulfathalbhydrat, Calciumsulfatanhydrit (wasserfreies Calciumsulfat), Kalkhydrat, hydraulisch abbindendem Kalk, Calciumoxid, Puzzolanen, latent-hydraulischen Zusatzstoffen, Trockenmörtel, Trockenspachtelmassen, Estrich, Ausgleichsmassen, insbesondere Fußbodenausgleichsmassen, Fugenmassen, Fliesenklebern, Armierungsmassen, Bauklebern, Trockenputzzusammensetzungen, Spritzbeton und einer beliebigen Mischung der vorangehend genannten pulverförmigen Massen.

16. Verwendung nach einem oder mehreren der Ansprüche 13 bis 15, **dadurch gekennzeichnet, dass**
die pulverförmige Masse, insbesondere in Form einer Mischung an Trockenbaustoffkomponenten, ausgewählt ist aus der Gruppe bestehend aus Trockenmörtel, Putzmörtel, Mauermörtel, Trockenspachtelmassen, Estrich, Ausgleichsmassen, insbesondere Fußbodenausgleichsmassen, Fugenmassen, Armierungsmassen, Fliesenklebern, Bauklebern, beispielsweise zur Befestigung von Dämmstoffelementen, Trockenputzzusammensetzungen, Spritzbeton, Spritzmörtel und einer Mischung der vorangehend genannten pulverförmigen Massen.

17. Verwendung nach einem oder mehreren der Ansprüche 13 bis 16, **dadurch gekennzeichnet, dass**
das Staubreduktionsmittel die Menge an alveolengängigem Staub gemäß DIN EN 481:1993-09 und/oder die Menge an einatembarem Staub gemäß DIN EN 481:1993-09 verringert.

18. Verwendung nach einem oder mehreren der Ansprüche 13 bis 17, **dadurch gekennzeichnet, dass**
das synthetisch gefällte Mineral synthetisch gefälltes Carbonat darstellt.

19. Verwendung nach Anspruch 18, **dadurch gekennzeichnet, dass** das synthetisch gefällte Carbonat ausgewählt ist aus der Gruppe bestehend aus Lithium-, Natrium-, Kalium-, Mangan-, Zink-, Eisen-, Kupfer-, Magnesium-, Calcium-, Strontium-, Barium-, Zirkoniumcarbonat und Mischungen dieser Carbonate, bevorzugt aus Mangan-, Zink-, Eisen-, Kupfer-, Magnesium-, Calcium-, Strontium-, Bariumcarbonat und deren beliebigen Mischungen, besonders bevorzugt Calciumcarbonat.

20. Verwendung nach einem oder mehreren der Ansprüche 13 bis 19, **dadurch gekennzeichnet, dass**
die synthetisch gefällte anorganische Verbindung, vorzugsweise das synthetisch gefällte Carbonat und besonders bevorzugt Calciumcarbonat, in skalenoedrischer, rhomboedrischer, prismatischer, stäbchenförmiger, sphärischer, kubischer, nadelförmiger oder plättchenförmiger Kristallmorphologie vorliegt, wobei die skalenoedrische oder stäbchenförmige Kristallmorphologie bevorzugt ist, oder
in Form von Agglomeraten aus einer oder mehreren der vorangehend genannten Kristallmorphologien oder
in Form einer Mischung aus mindestens zwei der vorangehend genannten Kristallmorphologien oder
in Form einer Mischung aus mindestens einem vorangehend genannten Agglomerat und mindestens einer der vorangehend genannten Kristallmorphologien,
wobei Mischungen von synthetisch gefällten anorganischen Verbindungen mit skalenoedrischer und stäbchenförmiger Kristallmorphologie besonders bevorzugt sind.

21. Verwendung nach einem oder mehreren der Ansprüche 18 bis 20, **dadurch gekennzeichnet, dass**
das synthetisch gefällte Calciumcarbonat Calcit, insbesondere skalenoedrischen Calcit, und/oder Aragonit, insbesondere stäbchenförmigen und/oder nadelförmigen Aragonit, umfasst oder hieraus besteht.

22. Verwendung nach einem oder mehreren der Ansprüche 13 bis 21, **dadurch gekennzeichnet, dass**
das partikuläre Material unbeschichtetes partikuläres Material darstellt.

23. Verwendung nach einem oder mehreren der Ansprüche 13 bis 22, **dadurch gekennzeichnet, dass**
die pulverförmige Mischung mindestens ein gebrochenes und/oder gemahlenes natürliches Mineral enthält.

24. Verwendung nach einem oder mehreren der Ansprüche 13 bis 23, **dadurch gekennzeichnet, dass**
die Menge an partikulärem Material, bevorzugt an synthetisch gefälltem Carbonat und besonders bevorzugt synthetisch gefälltem Calciumcarbonat, im Bereich von 1,0 bis 30 Gewichtsprozent und bevorzugt im Bereich von 2,0 bis 20 Gewichtsprozent, jeweils bezogen auf das Gesamtgewicht der pulverförmigen Mischung, liegt.

25. Verwendung nach einem oder mehreren der Ansprüche 13 bis 24, **dadurch gekennzeichnet, dass**
die synthetisch gefällte anorganische Verbindung eine mittlere Teilchengröße D₅₀ im Bereich von 0,2 bis 25 µm, bevorzugt im Bereich von 0,3 bis 20 µm und besonders bevorzugt im Bereich 0,4 bis 10 µm aufweist.

## Claims

1. A powdered mixture, containing
a major amount of a powdered mass selected from the group consisting of an organic and/or an inorganic fertilizer, insecticides, pesticides, herbicides, pigment powders, polysaccharides, animal litter, foodstuff, animal foodstuff, feedstocks for chemical production, dry extinguishing powders, organic binders, inorganic additives and any mixtures of the above-mentioned components, and 0.1 to 45 wt.% of particulate material comprising or consisting of at least one synthetically precipitated inorganic compound, wherein the synthetically precipitated inorganic compound comprises or consists of a synthetically precipitated mineral, and wherein the synthetically precipitated inorganic compound has an average particle size D50 in the range of 0.1 to 50 µm.

2. The powdered mixture according to Claim 1, **characterized in that** the synthetically precipitated mineral is synthetically precipitated carbonate.

3. The powdered mixture according to Claim 2, **characterized in that** the synthetically precipitated carbonate is selected from the group consisting of lithium carbonate, sodium carbonate, potassium carbonate, manganese carbonate, zinc carbonate, iron carbonate, copper carbonate, magnesium carbonate, calcium carbonate, strontium carbonate, barium carbonate, zirconium carbonate and mixtures of these carbonates, preferably manganese carbonate, zinc carbonate, iron carbonate, copper carbonate, magnesium carbonate, calcium carbonate, strontium carbonate, barium carbonate and any mixtures thereof, particularly preferably calcium carbonate.

4. The powdered mixture according to one or more of the preceding claims, **characterized in that**
the synthetically precipitated inorganic compound, preferably the synthetically precipitated carbonate and particularly preferably calcium carbonate, is present in scalenohedral, rhombohedral, prismatic, rod-shaped, spherical, cubic, acicular or plate-shaped crystal morphology, wherein the scalenohedral or rod-shaped crystal morphology is preferred, or is in the form of agglomerates of one or more of the above-mentioned crystal morphologies or in the form of a mixture of at least two of the above-mentioned crystal morphologies or in the form of a mixture of at least one above-mentioned agglomerate and at least one of the above-mentioned crystal morphologies, wherein mixtures of synthetically precipitated inorganic compounds with scalenohedral and rod-shaped crystal morphology are particularly preferred.

5. The powdered mixture according to one or more of Claims 2 to 4, **characterized in that**
the synthetically precipitated calcium carbonate comprises or consists of calcite, in particular scalenohedral calcite, and/or aragonite, in particular rod-shaped and/or acicular aragonite.

6. The powdered mixture according to one or more of the preceding claims, **characterized in that**
the particulate material is uncoated particulate material.

7. The powdered mixture according to one or more of the preceding claims, **characterized in that**
the pigment powder is a pigment mixture, or **in that** the polysaccharide is pectin, chitin, cellulose, starch, in particular starch flour and/or amylopectin, cellulose ester, in particular cellulose acetate, cellulose acetobutyrate and/or cellulose propionate, cellulose nitrate, cellulose ether, in particular carboxymethylcellulose, methylcellulose, carboxyethylcellulose, hydroxyethylcellulose, ethylcellulose, hydroxyethylmethylcellulose and/or hydroxypropylmethylcellulose, and/or starch ether, in particular hydroxypropyl starch.

8. The powdered mixture according to any one of the preceding claims, **characterized in that**
the organic binder is a dispersion powder, such as a redispersible dispersion powder, or **in that** the inorganic additives are pozzolans and/or latent hydraulic additives, in particular granulated blast-furnace slag, ground granulated blast-furnace slag, trass, fly ash and/or microsilicates, phyllosilicates, fillers, in particular mineral fillers, metal soaps, pyrogenic silica and/or precipitated silica or any mixtures thereof.

9. The powdered mixture according to one or more of the preceding claims, further containing at least one crushed and/or ground natural mineral.

10. The powdered mixture according to one or more of the preceding claims, **characterized in that**
the particulate material, in particular synthetically precipitated calcium carbonate, is present in the powdered mixture in an amount in the range of 1.0 to 30 wt.% and preferably in the range of 2.0 to 20 wt.%, in each case in relation to the total weight of the powdered mixture.

11. The powdered mixture according to one or more of the preceding claims, **characterized in that**
the synthetically precipitated inorganic compound has an average particle size D50 in the range of 0.2 to 25 µm and preferably in the range of 0.3 to 20 µm and particularly preferably in the range of 0.4 to 10 µm.

12. A method for preparing a powdered mixture according to one or more of Claims 1 to 11, **characterized in that**
the powdered mass and the amount of the particulate material comprising or consisting of the at least one synthetically precipitated inorganic compound are mixed together.

13. The use of particulate material comprising or consisting of at least one synthetically precipitated inorganic compound, wherein the synthetically precipitated inorganic compound has an average particle size D50 in the range of 0.1 to 50 µm, and wherein the synthetically precipitated inorganic compound comprises or consists of a synthetically precipitated mineral, for reducing dust formation by powdered masses, wherein the particulate material and the powdered mass are in the form of a powdered mixture, wherein the powdered mass forms the major amount of the powdered mixture, and wherein the powdered mixture contains 0.1 to 45 wt.% of the particulate material.

14. The use according to Claim 13, **characterized in that** the powdered mass contains an organic and/or an inorganic fertilizer, insecticide, pesticide, herbicide, pigment powder, e.g. pigment mixture, polysaccharide, in particular pectin, chitin, cellulose, starch, in particular starch flour and/or amylopectin, cellulose ester, in particular cellulose acetate, cellulose acetobutyrate and/or cellulose propionate, cellulose nitrate, cellulose ether, in particular carboxymethylcellulose, methylcellulose, carboxyethylcellulose, hydroxyethylcellulose, ethylcellulose, hydroxyethylmethylcellulose and/or hydroxypropylmethylcellulose, and/or starch ether, in particular hydroxypropyl starch, animal litter, in particular cat litter, foodstuff, animal foodstuff, feedstocks for chemical production, dry extinguishing powder or dry building material components or any mixtures of the above-mentioned components.

15. The use according to Claim 13 or 14, **characterized in that** the powdered mass, in particular in the form of the dry building material component, is selected from the group consisting of dispersion powder, inorganic binders, e.g. alkali water glasses, organic binders, phyllosilicates, fillers, in particular mineral fillers, ground granulated blast-furnace slag, fly ash, metal soaps, aluminium oxides, microsilicates, pyrogenic silica, precipitated silicas, cement, calcium sulphate dihydrate, calcium sulphate hemihydrate, calcium sulphate anhydrite (anhydrous calcium sulphate), hydrated lime, hydraulically setting lime, calcium oxide, pozzolans, latent hydraulic additives, dry mortar, dry spackling compounds, screed, levelling compounds, in particular floor levelling compounds, jointing compounds, tile adhesives, reinforcing compounds, building adhesives, dry plaster compositions, sprayed concrete and any mixture of the above-mentioned powdered masses.

16. The use according to one or more of Claims 13 to 15, **characterized in that**
the powdered mass, in particular in the form of a mixture of dry building material components, is selected from the group consisting of dry mortar, plastering mortar, masonry mortar, dry spackling compounds, screed, levelling compounds, in particular floor levelling compounds, jointing compounds, reinforcing compounds, tile adhesives, building adhesives, for example for fixing insulating elements, dry plaster compositions, sprayed concrete, sprayed mortar and a mixture of the above-mentioned powdered masses.

17. The use according to one or more of Claims 13 to 16, **characterized in that**
the dust-reducing agent reduces the amount of respirable dust according to DIN EN 481:1993-09 and/or the amount of inhalable dust according to DIN EN 481:1993-09.

18. The use according to one or more of Claims 13 to 17, **characterized in that** the synthetically precipitated mineral is synthetically precipitated carbonate.

19. The use according to Claim 18, **characterized in that** the synthetically precipitated carbonate is selected from the group consisting of lithium carbonate, sodium carbonate, potassium carbonate, manganese carbonate, zinc carbonate, iron carbonate, copper carbonate, magnesium carbonate, calcium carbonate, strontium carbonate, barium carbonate, zirconium carbonate and mixtures of these carbonates, preferably manganese carbonate, zinc carbonate, iron carbonate, copper carbonate, magnesium carbonate, calcium carbonate, strontium carbonate, barium carbonate and any mixtures thereof, particularly preferably calcium carbonate.

20. The use according to one or more of Claims 13 to 19, **characterized in that**
the synthetically precipitated inorganic compound, preferably the synthetically precipitated carbonate and more preferably calcium carbonate, is present in scalenohedral, rhombohedral, prismatic, rod-shaped, spherical, cubic, acicular or plate-shaped crystal morphology, wherein the scalenohedral or rod-shaped crystal morphology is preferred, or
in the form of agglomerates of one or more of the above-mentioned crystal morphologies, or
in the form of a mixture of at least two of the above-mentioned crystal morphologies, or
in the form of a mixture of at least one above-mentioned agglomerate and at least one of the above-mentioned crystal morphologies,
wherein mixtures of synthetically precipitated inorganic compounds having scalenohedral and rod-shaped crystal morphology are particularly preferred.

21. The use according to one or more of Claims 18 to 20, **characterized in that**
the synthetically precipitated calcium carbonate comprises or consists of calcite, in particular scalenohedral calcite, and/or aragonite, in particular rod-shaped and/or acicular aragonite.

22. The use according to one or more of Claims 13 to 21, **characterized in that** the particulate material is uncoated particulate material.

23. The use according to one or more of Claims 13 to 22, **characterized in that**
the powdered mixture contains at least one crushed and/or ground natural mineral.

24. The use according to one or more of Claims 13 to 23, **characterized in that**
the amount of particulate material, preferably synthetically precipitated carbonate and particularly preferably synthetically precipitated calcium carbonate, is in the range of 1.0 to 30 wt.% and preferably in the range of 2.0 to 20 wt.%, in each case in relation to the total weight of the powdered mixture.

25. The use according to one or more of Claims 13 to 24, **characterized in that**
the synthetically precipitated inorganic compound has an average particle size D50
in the range of 0.2 to 25 µm, preferably in the range of 0.3 to 20 µm and particularly preferably in the range of 0.4 to 10 µm.

## Revendications

1. Mélange pulvérulent, contenant
une quantité principale de masse pulvérulente sélectionnée parmi le groupe se composant de : un engrais organique et/ou anorganique, des insecticides, des pesticides, des herbicides, des poudres de pigments, des polysaccharides, de la litière pour animaux, des aliments, des aliments pour animaux, des substances de charge pour la production chimique, des poudres extinctrices sèches, des liants organiques, des additifs anorganiques et des mélanges quelconques des composants mentionnés précédemment, et de 0,1 à 45 % massique de matériau particulaire comprenant, ou se composant de, au moins une composition anorganique précipitée par synthèse, la composition anorganique précipitée par synthèse comprenant un minéral précipité par synthèse ou se composant de celui-ci, et la composition anorganique précipitée par synthèse présentant une taille de particules moyenne D₅₀ dans la plage de 0,1 à 50 µm.

2. Mélange pulvérulent selon la revendication 1, **caractérisé en ce que** le minéral précipité par synthèse représente du carbonate précipité par synthèse.

3. Mélange pulvérulent selon la revendication 2, **caractérisé en ce que** le carbonate précipité par synthèse est sélectionné parmi le groupe se composant de : carbonate de lithium, carbonate de sodium, carbonate de potassium, carbonate de manganèse, carbonate de zinc, carbonate de fer, carbonate de cuivre, carbonate de magnésium, carbonate de calcium, carbonate de strontium, carbonate de baryum, carbonate de zirconium et de mélanges de ces carbonates, de préférence de carbonate de manganèse, carbonate de zinc, carbonate de fer, carbonate de cuivre, carbonate de magnésium, carbonate de calcium, carbonate de strontium, carbonate de baryum et de mélanges quelconques de ceux-ci, en particulier de préférence de carbonate de calcium.

4. Mélange pulvérulent selon l'une ou plusieurs des revendications précédentes, **caractérisé en ce que**
la composition anorganique précipité par synthèse, de préférence le carbonate précipité par synthèse et particulièrement de préférence le carbonate de calcium, est présent en morphologie cristalline scalénoédrique, rhomboédrique, prismatique, en forme de bâtonnets, sphérique, cubique, aciculaire ou en forme de plaquettes, la morphologie cristalline scalénoédrique ou en forme de bâtonnets étant préférée, ou sous forme d'agglomérats d'une ou plusieurs des morphologies cristallines mentionnées précédemment ou sous forme d'un mélange d'au moins deux morphologies cristallines mentionnées précédemment ou sous forme d'un mélange d'au moins un agglomérat mentionné précédemment et d'au moins une des morphologies cristallines mentionnées précédemment, des mélanges de compositions anorganiques précipitées par synthèse avec morphologie cristalline scalénoédrique et en forme de bâtonnets étant particulièrement préférés.

5. Mélange pulvérulent selon l'une ou plusieurs des revendications 2 à 4, **caractérisé en ce que**
le carbonate de calcium précipité par synthèse, comprend du, ou se compose de, calcite, en particulier de calcite scalénoédrique, et/ou d'aragonite, en particulier d'aragonite en forme de bâtonnets et/ou aciculaire.

6. Mélange pulvérulent selon l'une ou plusieurs des revendications précédentes, **caractérisé en ce que**
le matériau particulaire représente un matériau particulaire non revêtu.

7. Mélange pulvérulent selon l'une ou plusieurs des revendications précédentes, **caractérisé en ce que**
la poudre de pigment représente un mélange de pigments ou **en ce que** le polysaccharide représente : pectine, chitine, cellulose, amidon, en particulier fécule et/ou amylopectine, ester de cellulose, en particulier acétate de cellulose, acétobutyrate de cellulose et/ou propionate de cellulose, nitrate de cellulose, éther de cellulose, en particulier carboxyméthylcellulose, méthylcellulose, carboxyéthylcellulose, hydroxyéthylcellulose, éthylcellulose, hydroxyéthylméthylcellulose et/ou hydroxypropylméthylcellulose, et/ou éther d'amidon, en particulier amidon hydroxypropylique.

8. Mélange pulvérulent selon l'une quelconque des revendications précédentes, **caractérisé en ce que**
le liant organique représente une poudre de dispersion telle qu'une poudre de dispersion redispersable ou **en ce que** les substances de charge anorganiques représentent de la pouzzolane et/ou des substances de charge à caractère hydraulique latent, en particulier du sable de fonderie, du sable de fonderie moulu, du trass, de la cendre volante et/ou des microsilicates, des phyllosilicates, des charges, particulièrement des charges minérales, des savons de métal, des acides siliciques pyrogènes et/ou des acides siliciques de précipitation ou des mélanges quelconques de ceux-ci.

9. Mélange pulvérulent selon l'une ou plusieurs des revendications précédentes, comprenant en outre
au moins un minéral naturel broyé et/ou moulu.

10. Mélange pulvérulent selon l'une ou plusieurs des revendications précédentes, **caractérisé en ce que**
le matériau particulaire, en particulier du carbonate de calcium précipité par synthèse, est présent dans le mélange pulvérulent en une quantité dans la plage de 1,0 à 30 % massique et de préférence dans la plage de 2,0 à 20 % massique, respectivement par rapport au poids total du mélange pulvérulent.

11. Mélange pulvérulent selon l'une ou plusieurs des revendications précédentes, **caractérisé en ce que**
la composition anorganique précipitée par synthèse présente une taille de particules moyenne D₅₀ dans la plage de 0,2 à 25 µm et de préférence dans la plage de 0,3 à 20 µm et particulièrement de préférence dans la plage de 0,4 à 10 µm.

12. Procédé pour la fabrication d'un mélange pulvérulent selon l'une ou plusieurs des revendications 1 à 11, **caractérisé en ce qu'**on mélange ensemble la masse pulvérulente et la quantité de matériau particulaire comprenant, ou se composant de, l'au moins une composition anorganique précipitée par synthèse.

13. Utilisation de matériau particulaire comprenant, ou se composant de, au moins une composition anorganique précipitée par synthèse, la composition anorganique précipitée par synthèse présentant une taille de particules moyenne D₅₀ dans la plage de 0,1 à 50 µm et la composition anorganique précipitée par synthèse comprenant du, ou se composant de, un minéral précipité par synthèse pour la réduction de la formation de poussière de masses pulvérulentes, le matériau particulaire et la masse pulvérulente étant présents sous la forme d'un mélange pulvérulent, la masse pulvérulente formant la quantité principale du mélange pulvérulent et le mélange pulvérulent comprenant de 0,1 à 45 % massique du matériau particulaire.

14. Utilisation selon la revendication 13, **caractérisée en ce que** la masse pulvérulente comprend un engrais organique et/ou anorganique, un insecticide, un pesticide, un herbicide, de la poudre de pigment, par exemple un mélange de pigments, du polysaccharide, en particulier de la pectine, de la chitine, de la cellulose, de l'amidon, en particulier de la fécule et/ou de l'amylopectine, un ester de cellulose, en particulier un acétate de cellulose, un acétobutyrate de cellulose et/ou un propionate de cellulose, un nitrate de cellulose, un éther de cellulose, en particulier de la carboxyméthylcellulose, de la méthylcellulose, de la carboxyéthylcellulose, de l'hydroxyéthylcellulose, de l'éthylcellulose, de l'hydroxyéthylméthylcellulose et/ou de l'hydroxypropylméthylcellulose, et/ou un éther d'amidon, en particulier un amidon hydroxypropylique, de la litière pour animaux, en particulier de la litière pour chats, des aliments, des aliments pour animaux, des substances de charge pour la production chimique, des poudres extinctrices sèches, des composants de matériaux de construction à sec ou des mélanges quelconques des composants mentionnés précédemment.

15. Utilisation selon la revendication 13 ou 14, **caractérisée en ce que** la masse pulvérulente, en particulier sous la forme des composants de matériaux de construction à sec, est sélectionnée parmi le groupe se composant de :
poudre dispersée, liants anorganiques, par exemple verres solubles alcalins, liants organiques, phyllosilicates, charges, en particulier charges minérales, sable de fonderie moulu, cendre volante, savons de métal, oxydes d'aluminium, microsilicates, acide silicique pyrogène, acide silicique de précipitation, ciment, dihydrate de sulfate de calcium, hémihydrate de sulfate de calcium, anhydrate de sulfate de calcium (sulfate de calcium anhydre), hydroxyde de calcium, chaux hydraulique, oxyde de calcium, pouzzolanes, substances de charge à caractère hydraulique latent, mortiers secs, mastics secs, chape, matières de compensation, en particulier matières de compensation de sol, mastics de jointoiement, colles pour carrelage, matières pour armatures, colles de construction, compositions d'enduits secs, béton projeté, et d'un mélange quelconque des matières pulvérulentes mentionnées précédemment.

16. Utilisation selon l'une ou plusieurs des revendications 13 à 15, **caractérisée en ce que**
la matière pulvérulente, en particulier sous la forme d'un mélange de composants de matériaux de construction à sec, est sélectionnée parmi le groupe se composant de : mortiers secs, mortiers d'enduit, mortiers de maçonnerie, mastics secs, chape, matières de compensation, en particulier matières de compensation de sol, mastics de jointoiement, matières pour armatures, colles pour carrelage, colles de construction, par exemple pour la fixation d'éléments en matériaux isolants, compositions d'enduits secs, béton projeté, mortiers projeté et d'un mélange quelconque des matières pulvérulentes mentionnées précédemment.

17. Utilisation selon l'une ou plusieurs des revendications 13 à 16, **caractérisée en ce que**
le moyen de réduction de poussière diminue la quantité de poussière alvéolaire conformément à la norme DIN EN 481:1993-09 et/ou la quantité de poussière inhalable conformément à la norme DIN EN 481:1993-09.

18. Utilisation selon l'une ou plusieurs des revendications 13 à 17, **caractérisée en ce que**
le minéral précipité par synthèse représente du carbonate précipité par synthèse.

19. Utilisation selon la revendication 18, **caractérisée en ce que** le carbonate précipité par synthèse est sélectionné parmi le groupe se composant de : carbonate de lithium, carbonate de sodium, carbonate de potassium, carbonate de manganèse, carbonate de zinc, carbonate de fer, carbonate de cuivre, carbonate de magnésium, carbonate de calcium, carbonate de strontium, carbonate de baryum, carbonate de zirconium et de mélanges de ces carbonates, de préférence de carbonate de manganèse, carbonate de zinc, carbonate de fer, carbonate de cuivre, carbonate de magnésium, carbonate de calcium, carbonate de strontium, carbonate de baryum et de mélanges quelconques de ceux-ci, en particulier de préférence de carbonate de calcium.

20. Utilisation selon l'une ou plusieurs des revendications 13 à 19, **caractérisée en ce que**
la composition anorganique précipité par synthèse, de préférence le carbonate précipité par synthèse et particulièrement de préférence le carbonate de calcium, est présent en morphologie cristalline scalénoédrique, rhomboédrique, prismatique, en forme de bâtonnets, sphérique, cubique, aciculaire ou en forme de plaquettes, la morphologie cristalline scalénoédrique ou en forme de bâtonnets étant préférée, ou sous forme d'agglomérats d'une ou plusieurs des morphologies cristallines mentionnées précédemment ou
sous forme d'un mélange d'au moins deux morphologies cristallines mentionnées précédemment ou
sous forme d'un mélange d'au moins un agglomérat mentionné précédemment et d'au moins une des morphologies cristallines mentionnées précédemment,
des mélanges de compositions anorganiques précipitées par synthèse avec morphologie cristalline scalénoédrique et en forme de bâtonnets étant particulièrement préférés.

21. Utilisation selon l'une ou plusieurs des revendications 18 à 20, **caractérisée en ce que**
le carbonate de calcium précipité par synthèse, comprend du, ou se compose de, calcite, en particulier de calcite scalénoédrique, et/ou d'aragonite, en particulier d'aragonite en forme de bâtonnets et/ou aciculaire.

22. Utilisation selon l'une ou plusieurs des revendications 13 à 21, **caractérisée en ce que**
le matériau particulaire représente un matériau particulaire non revêtu.

23. Utilisation selon l'une ou plusieurs des revendications 13 à 22, **caractérisée en ce que**
le mélange pulvérulent contient au moins un minéral naturel broyé et/ou moulu.

24. Utilisation selon l'une ou plusieurs des revendications 13 à 23, **caractérisée en ce que**
la quantité de matériau particulaire, de préférence du carbonate précipité par synthèse, et particulièrement de préférence du carbonate de calcium précipité par synthèse, se trouve dans la plage de 1,0 à 30 % massique et de préférence dans la plage de 2,0 à 20 % massique, respectivement par rapport au poids total du mélange pulvérulent.

25. Utilisation selon l'une ou plusieurs des revendications 13 à 24, **caractérisée en ce que**
la composition anorganique précipitée par synthèse présente une taille de particules moyenne D₅₀ dans la plage de 0,2 à 25 µm, de préférence dans la plage de 0,3 à 20 µm et particulièrement de préférence dans la plage de 0,4 à 10 µm.
